# EUROPEAN PATENT APPLICATION

(11) **EP 4 249 153 A1**
(43) Date of publication of application: **27.09.2023**
(21) Application number: 23159621.4
(22) Date of filing: 02.03.2023
(51) Int. Cl.: B22F 10/20, B22F 10/85, B29C 64/393, B33Y 10/00, B33Y 50/02, B28B 1/00

(54) **TOOL FOR SCAN PATH VISUALIZATION AND DEFECT DISTRIBUTION PREDICTION**

(30) Priority: 25.03.2022 US 202217704696
(71) Applicant: General Electric Company, Schenectady, NY 12345 (US)
(72) Inventor: MCCARTHY, Brian S., Schenectady, New York, 12345 (US); YANG, Pinghai, Schenectady, New York, 12345 (US); GUPTA, Vipul Kumar, Schenectady, New York, 12345 (US); MESHKOV, Andrey I., Schenectady, New York, 12345 (US); BOLLAPRAGADA, Rajesh, Schenectady, New York, 12345 (US)
(74) Representative: Hafner & Kohl PartmbB

(57) **Abstract**

A system (100) and method for analyzing a build file (104) in an additive manufacturing process for predicting and analyzing defects in an additive part. The method further includes the steps of reading an additive build file (104) containing a set of scan paths, analyzing the scan paths for potential defects, creating transfer functions that correspond to any melt pools along the scan paths and then predicting pores, excessive melting and surface finish. A probability of melting along the scan path can also be computed along with a prediction for melt pool shape, which both can be used to analyze the build file (104) and create a stronger 3D printed part.

## Description

### TECHNICAL FIELD

The present disclosure relates, generally, to additive manufacturing processes and, more specifically, to visualizing, analyzing, and predicting defects in an additive manufactured part.

### BACKGROUND

Additive manufacturing processes have become more common in recent years to produce parts for various purposes. For example, Direct Metal Laser Melting (DMI,M) is an Additive Manufacturing (AM) process that may be used to fabricate precision three-dimensional (3D) components from a digital model. Such components can be fabricated using an additive process, where successive layers of material are solidified one on top of the other.

### BRIEF DESCRIPTION OF THE DRAWINGS

FIG. 1 schematically depicts an illustrative distributed additive manufacturing system that includes a computer system according to one or more embodiments shown and described herein.
FIG. 2 depicts a flow diagram of an illustrative method for additive manufacturing using a DMLM process according to one or more embodiments shown and described herein.
FIG. 3 schematically depicts an illustrative DMLM process for the additive manufacturing system of FIG. 1 according to one or more embodiments shown and described herein.
FIG. 4 schematically depicts an illustrative method for mapping a size and a shape of a melt pool according to one or more embodiments shown and described herein.

### DETAILED DESCRIPTION

The present disclosure generally relates to devices, systems, and methods for ensuring quality and detecting defects and anomalies in a 3D printing process. This 3D printing process can include Direct Metal Laser Melting (DMLM) additive processes, and other 3D printing processes, including Electron Beam (E-Beam), Directed Energy Deposition (DED), and Fused Deposition Modeling (FDM). It should be understood that a scan path can also encompass such terms as tool path, and that melt pools can also encompass an extrusion or a deposition. The present disclosure relates to these and other additive manufacturing methods that involve a build file specifying a moving source (deposition nozzle, electron beam, among other features) that solidifies material with some local shape. In general, computer-aided design (CAD) software may be used to design a 3D part and store this part in a CAD file. At least some additive manufacturing systems involve the buildup of a powdered material to make a component based off a CAD file. This method can produce complex components from expensive materials at a reduced cost and with improved manufacturing efficiency.

In particular, DMLM is an additive manufacturing process that uses lasers to melt ultrathin layers of metal powder to build 3D objects. Parts are built directly from a file generated from CAD (computer-aided design) data. The file is converted to a sliced file through machine software, which can be uploaded to a machine for the build process. The use of a laser to selectively melt thin layers of tiny particles yields objects exhibiting fine, dense and homogeneous characteristics. A fundamental challenge that remains to be solved in 3D printing processes is distortion mitigation. In addition, build files contain potentially problematic areas within three-dimensionally printed parts. Analyzing these areas and predicting them within an additive manufacturing system in an efficient and effective manner can ensure the integrity of the parts that are created.

At least some additive manufacturing systems, such as DMLM systems, fabricate components using a laser device and a powder material, such as, without limitation, a powdered metal. The laser device generates a laser beam that melts the powder material in and around the area where the laser beam is incident on the powder material, resulting in a melt pool. In some DMLM systems, component quality may be impacted by excess heat and/or variation in heat being transferred to the metal powder by the laser device within the melt pool. However, the present disclosure is not limited only to DMLM systems, but also include, for example, Selective Laser Melting (SLM), Direct Metal Laser Melting (DMLM), Fused Deposition Modeling (FDM), Selective Laser Sintering (SLS), 3D printing such as by inkjets, laser jets, and binder jets, Stereolithography (SLA), Direct Selective Laser Sintering (DSLS), Electron Beam Sintering (EBS), Electron Beam Melting (EBM), Laser Engineered Net Shaping (LENS), Laser Net Shape Manufacturing (LNSM), Direct Metal Deposition (DMD), Digital Light Processing (DLP), Direct Selective Laser Melting (DSLM), and other known processes.

The present disclosure is related to a tool for analyzing the scan paths for a build file to identify portions of the build that will develop defects in the printed part. Many tools exist to visualize a one-dimensional tool path, but the present disclosure relates to providing an estimation of the full 3D as scanned shape to better understand the part and its properties including volumetric distribution of pores, lack of fusion defects and areas are over-processed, or melted an excessive number of times. Many potential defects and anomalies exist in metal additives that are directly related to the scan path and process parameters.

For instance, lack-of-fusion defects can form, if pockets of the part are not melted. In addition, processing an area too many times can lead to decreased build rate, undesired microstructure and texture, and even cracking in some alloys. Additionally, while a laser beam can be emitted through a plume created by its own or another laser's melt pool, certain characteristics of the laser beam may be degraded (e.g., lesser intensity, scattered, etc.) by the plume. This can result in a decreased power and energy delivered to the part, and can be further accounted for by updating a transfer function to provide an updated melt pool shape where there is plume interaction. In some embodiments, a video feed can be used to detect this defect and other potential defects by analyzing gas flow in the 3D printing machine and the timing of the scan paths in the build file for the part. Spattered material landing on the unprocessed area of the part is another problem that can lead to porosity and weakness in the final part.

It should be appreciated that the term "transfer function," which is also referred to in the art as a "system function" or a "network function," is a mathematical function which theoretically models a system's output for each possible input. More specifically, as used herein, a transfer function includes a map or function between processing parameters, local geometry, build plate location, sensor data, and/or the like for a local melt pool shape, as described in greater detail herein. In embodiments where probability is used, the transfer function includes a map or function between processing parameters, local geometry, build plate location, sensor data, and/or the like for a "heatmap" that gives probability of melting at all neighboring points. Such transfer functions are derived through simulation and/or experiment. For DMI,M specifically, processing parameters may include power, speed and focus. Build plate location and laser assignment may influence incidence angle. Plume interaction and scanpath ordering can also be considered. Other modalities may have other inputs to the transfer function (e.g., for directed energy deposition, (DED), feed-rate may be considered, for example). Additional details regarding the transfer function will be apparent from the disclosure.

Given the wide array of potential issues that can arise as a result of the complicated geometries created via additive manufacturing, the current software available does not do an adequate job of predicting defects and correcting these defects. Additionally, in many cases, scan path generation software uses over-simplified rules to avoid plume interference, pores, lack-of-fusion defects, and other issues that provide no guarantee of preventing defects leading to weaker parts.

The present disclosure relates to a system and method that can evaluate a build file and predict potential defects and volumetric distribution of a part and can give insight to material and parameter developers into specific planes in order to look for defects and give insight into the cause of any potential defects that are found. Using the systems and methods of the present disclosure, developers of 3D printed objects can optimize build rates and part quality by visualizing and quantifying anomalies in various ways. In addition, this method and system can apply to small samples used for parameter development as well as full parts.

In general, the DMLM process begins with a recoater spreading a thin layer of metal powder on the print bed. Next, there is a file that is generated that lays down the scan paths that control the exposure of the laser to melt the powder and create a cross section of the object. Next the system builds objects, such as, for example, a part, in a layer-by-layer manner by sintering or melting a powder material using energy beams generated by one or more sources such as, for example, a laser. The powder to be melted by the energy beam is supplied by a reservoir and is spread evenly over a build plate using a recoater (e.g., a recoater arm) traveling in a direction to maintain the powder at a level and/or remove excess powder material extending above the powder level to a waste container. In addition, a plurality of lasers may be used to build different sections of the part. The energy beams sinter or melt a cross sectional layer of the object being built under control of one or more galvo scanners. The build plate is then lowered and another layer of powder is spread over the build plate and the part being built, followed by successive melting/sintering of the powder by the lasers.

The process is repeated until the part is completely built from the melted/sintered powder material. After all layers are printed, the excess unmelted powder is removed. In some DMLM systems, component surface quality, particularly overhang or downward facing surfaces, is reduced due to the variation in conductive heat transfer between the powdered metal and the surrounding solid material of the component. As a result, local overheating may occur, particularly at the overhang surfaces. The melt pool produced by the laser device may become too large, resulting in the melted metal spreading into the surrounding powdered metal as well as the melt pool penetrating deeper into the powder bed, pulling in additional powder into the melt pool. The increased melt pool size and depth, and the flow of molten metal may generally result in a poor surface finish of the overhang or downward facing surface. In addition melt pools that are missing or inconsistent with desired shape of the object can occur, which can be caused by plume interaction, insufficient substrate temperature, dirty optical window, or an improperly calibrated machine, among other potential causes. It is therefore an object of the present disclosure to monitor melt pools during the build process for process control and development.

The laser or multiple lasers may be controlled by a computer system including a processor and a memory. The computer system may determine a scan pattern for each layer and may control the lasers to irradiate the powder material according to the scan pattern. Each of the lasers may operate on a different portion of the build plate and may be used to build different sections of the part. As the part is built one layer at a time, the thermal gradient and/or the strain on the part may cause the part to have various distortions form including melt pools. Accordingly, it may be desirable to predict where such distortions are likely to occur so that preventative steps can be taken to prevent their occurrence or minimize their impact.

After fabrication of the part is complete, various post-processing procedures may be applied to the part. Post processing procedures may include removal of excess powder by, for example, blowing, vacuuming, and/or brushing the excess powder. Other post processing procedures may include a stress release process. Additionally, thermal and chemical post processing procedures may be used to finish the part.

In order for the part to be built in multiple sections using the lasers, there may be multiple lasers that are calibrated with respect to each other. That is, the laser strikes from the lasers may occur at predetermined locations on the build plate such that the section of the part formed from impingement of a first laser beam and the section of the part built from impingement of a second laser beam are properly aligned. In embodiments disclosed herein, a camera may monitor the positions of the laser strikes made by the lasers. By monitoring the positions of the laser strikes of the lasers, the alignment of the lasers with respect to each other may be determined, as disclosed herein. It should be understood that melt pools vary along the strikes, and that the start and end of effects of melt pools vary based on the part that is being created. If the lasers become misaligned, they may be adjusted to ensure proper alignment. For example, a camera may be positioned to capture images along a scan line of one of the lasers as disclosed herein.

In embodiments disclosed herein, techniques may be used to predict an expected amount distortion of a part during additive manufacturing. This may be used to determine a baseline likelihood of a melt pool forming and also what shape the melt pool may take along the part surface. In addition, in embodiments disclosed herein, the orientation of the part or features within the part may be considered in order to determine an adjusted likelihood of a melt pool forming, indicating a likelihood that any particular distortion will cause the part to be compromised.

The systems and methods as described herein facilitate enhancing the precision of additive manufacturing systems and improving the durability and accuracy of creating 3D objects during additive manufacturing processes. Specifically, the systems and methods described herein include a DMLM system 100 that obtains a build file, analyzes the scan paths based on instructions from the build file and predicts and analyzes potential melt pool shapes by creating transfer functions that correspond to melt pool shapes. However the parts and systems are not limited to DMLM systems, but can include other additive manufacturing systems and processes as mentioned above. The build file is then corrected based on this analysis and is used to produce an improved 3D part.

Some embodiments involve the use of one or more electronic or computing devices. Such devices typically include a processor or controller, such as a general purpose central processing unit (CPU), a graphics processing unit (GPU), a microcontroller, a reduced instruction set computer (RISC) processor, an application specific integrated circuit (ASIC), a programmable logic circuit (PLC), and/or any other circuit or processor capable of executing the functions described herein. The methods described herein may be encoded as executable instructions embodied in a computer readable medium, including, without limitation, a storage device and/or a memory device. Such instructions, when executed by a processor, cause the processor to perform at least a portion of the methods described herein. The above examples are exemplary, and thus are not intended to limit in any way the definition and/or meaning of the term processor.

In one embodiment, there is a method for predicting the formation of defects within a printed part, wherein experimental data, simulation data, or sensor data related to the part, or some combination of all three is analyzed to understand melt pool behavior. Based off this analysis a signed distance function representing the shape of the defect or a probability heat map indicating the formation of the defect, or a combination of the two is computed by using analytical or image processing techniques. Next, the process sweeps the signed distance function and probability heat map into three dimensions to create a representation of the defect on the part. For two or more melt pools or defects, the process can combine the signed distance and probability values in order to predict the defects for multiple sections of the part. Lastly, the process proceeds to iso-surface extraction, whereby certain surfaces are analyzed to determine boundary representation of the part with sub-voxel accuracy based on the signed distance functions and the probability values. In addition, other post-processing techniques can be used to find further defects in the section or part.

All systems and processes discussed herein may be embodied in program code stored on one or more non-transitory computer-readable media. Such media may include, for example, a floppy disk, a CD-ROM, a DVD-ROM, a Flash drive, magnetic tape, and solid state Random Access Memory (RAM) or Read Only Memory (ROM) storage units. Embodiments are therefore not limited to any specific combination of hardware and software.

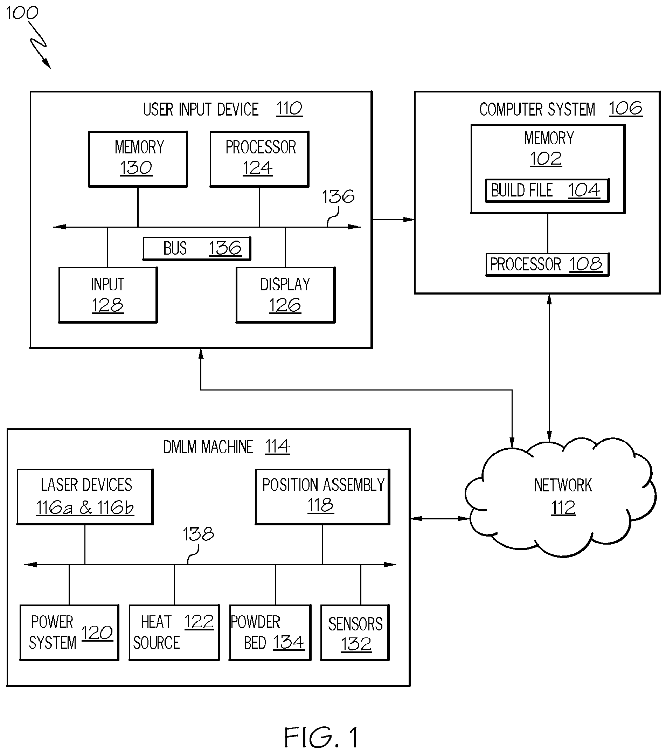

FIG. 1 is a schematic view of an example DMLM system 100 for performing DMLM additive manufacturing. In one embodiment, DMLM system 100 can include a user input device 110, a computer system 106, and a DMLM machine 114 communicatively coupled to one another via a network 112. In another embodiment all of these components can be included in one device and nothing in this disclosure should be seen as limiting the various configurations available. Computer system 106 may include, for example, a 3D model of component in a build file 104 to be fabricated by DMLM system 100. Executable instructions executed by the processor 108 may include controlling the power output of laser devices 116a and 116b, and controlling scanning speeds of scanning devices and the position assembly 118. The DMI,M components are all connected via a network 112 and can include a DMLM machine 114 with various components including laser devices 116a and 116b, a position assembly 118, a power system 120, a heat source 122, a powder bed 134 and sensors 132. The DMI,M machine 114 components can all communicate through a bus 138 and are connected to the user input device 110 and computer system 106 through a network 112.

Computer system 106 may include at least one processor (shown in FIG. 1) that carries out executable instructions to operate DMLM system 100. Computer system 106 may include, for example, a calibration model within the memory 102 and an electronic computer build file 104 associated with a component. The calibration model may include, without limitation, an expected or desired melt pool size and temperature under a given set of operating conditions (e.g., a power of laser devices 116a and 116b) of DMI,M system 100. The build file may include build parameters that are used to control one or more components of DMLM system 100. Build parameters may include, without limitation, a power of laser devices 116a and 116b, a scan speed of a DMLM machine 114, a position, and orientation of the laser devices 116a and 116b in the DMLM machine 114. In other embodiments, computing device 106 and DMLM machine 114 may be combined as a single device that operates as both computer system 106 and DMLM machine 114 as each are described herein.

In one embodiment, computer system 106 includes a memory device 102 and a processor 108 coupled to memory device 102. Processor 108 may include one or more processing units, such as, without limitation, a multi-core configuration. In one embodiment, processor 108 includes a field programmable gate array (FPGA). In other embodiments, processor 108 may include any type of processor that enables computer system 106 to function as described herein. In some embodiments, executable instructions are stored in memory device 102. Computer system 106 is configurable to perform one or more executable instructions described herein by programming processor 108. For example, processor 108 may be programmed by encoding an operation as one or more executable instructions and providing the executable instructions in memory 102. In one embodiment, memory 102 is one or more devices that enable storage and retrieval of information such as, without limitation, executable instructions or other data. Memory 102 may include one or more tangible, non-transitory, computer readable media, such as, without limitation, random access memory (RAM), dynamic RAM, static RAM, a solid-state disk, a hard disk, read-only memory (ROM), erasable programmable ROM, electrically erasable programmable ROM, or non-volatile RAM memory. The above memory types are exemplary, and are thus not limiting as to the types of memory usable for storage of a computer program.

The user input device 110 includes a memory 130, a processor 124, a display 126, and an input 128, as described in more detail herein. The memory 130, processor, 124, a display 126, and an input 128 such as a keyboard or other input means, are all connected and communicate to one another via a bus 136.

The processor 124 may include any processing component configured to receive and execute instructions (such as from the memory 130). The input 128 may include a monitor, keyboard, mouse, printer, camera, microphone, speaker, touch-screen, and/or other device for receiving input and outputting information. The network 112 may include any wired or wireless networking hardware, such as a modem, Local Area Network (LAN) port, wireless fidelity (Wi-Fi) card, WiMax card, mobile communications hardware, and/or other hardware for communicating with other networks and/or devices, such as the DMI,M machine 114 of FIG. 1.

The memory 130 may be configured as volatile and/or nonvolatile computer readable medium and, as such, may include random access memory (including SRAM, DRAM, and/or other types of random access memory), flash memory, registers, compact discs (CD), digital versatile discs (DVD), and/or other types of storage components. Additionally, the memory component 130 may be configured to store operating logic. A network 112 is also included in FIG. 1 and may be implemented as a bus or other interface to facilitate communication among the components of the DMLM system 100.

The build file 104 can contain instructions for operating the DMLM machine 114 and specifically the laser devices 116a and 116b. The file can include instructions and parameters, for instance, to set laser power to a number of watts, set the speed of the laser to a certain amount of millimeters per second and set spot size, among other variables. Further, the build file 104 can include scan paths which direct the laser to scan from one location to another location. In one embodiment the laser devices 116a and 116b goes over a powder creating a melt pool, and the computer system 106 uses its processor 108 to analyze the build file 104 to predict melt pool shapes. The computer system 106 can further create a function based off variables including laser power, laser speed and laser spot size, that are linked to a specific melt pool shape that is produced by laser devices 116a and 116b. Also, sensor data from a source such as a camera or a photodiode that is down stream of the laser devices 116a and 116b can be used to predict melt pool shapes. In one embodiment, the computer system 106 can analyze the scan paths in the build file for potential defects by dividing the scan paths up into sections where a probability of melting is computed for each section and a combined probability of melting is computed at each point based on a plurality of scan paths.

Computer system 106 is configured to control one or more components of DMLM system 100 based on build parameters associated with a build file 104 stored, for example, within computer system 106. In the one embodiment, computer system 106 is configured to control DMLM machine 114 based on a build file associated with a component to be fabricated with DMLM system 100. More specifically, computer system 106 is configured to control the position, movement, and scan speed of mirrors and motors in the DMI,M machine 114 based upon a predetermined path defined by a build file 104 associated with a component.

Computer system 106 may also be configured to control other components of DMI,M system 100, including, without limitation, laser devices 116a and 116b. In one embodiment, for example, computer system 106 controls the power output of laser devices 116a and 116b based on build parameters associated with a build file 104. In some embodiments, computer system 106 can include a presentation interface coupled to processor 108 or computer system 106 can use user input device 110 to display a user interface on display 126. A user interface presents information, such as, without limitation, the operating conditions of DMLM system 100, to a user. In one embodiment, presentation interface includes a display adapter (not shown) coupled to a display device such as, without limitation, a cathode ray tube (CRT), a liquid crystal display (LCD), an organic light-emitting diode (OLED) display, or an "electronic ink" display. In some embodiments, presentation interface includes one or more display devices. In addition, or alternatively, presentation interface includes an audio output device (not shown), for example, without limitation, an audio adapter or a speaker (not shown).

In some embodiments, computer system 106 includes a user input interface or the user input device 110 can be used instead. In one embodiment, user input device 110 is coupled to processor 124 and receives input from a user. User input device 110 may include, for example, without limitation, a keyboard, a pointing device, a mouse, a stylus, a touch sensitive panel, such as, without limitation, a touch pad or a touch screen, and/or an audio input interface, such as, without limitation, a microphone. A single component, such as a touch screen, may function as both a display device 126 of presentation interface and user input device 110.

In one embodiment, a network 112 is configured to be coupled in communication with one or more other devices, such as, without limitation, computer system 106, user input device 110 and DMLM machine 114. Each of these devices can include, for example, without limitation, a wired network adapter, a wireless network adapter, a mobile telecommunications adapter, a serial communication adapter, or a parallel communication adapter. Network 112 may receive a data signal from or transmit a data signal to one or more remote devices.

In one embodiment, DMI,M system 100 is configured to fabricate aircraft components, such as nozzles and the like. Materials suitable for forming such components, including, without limitation, gas atomized alloys of cobalt, iron, aluminum, titanium, nickel, and combinations thereof. In other embodiments, powder bed 134 may include any suitable type of powdered metal material. In yet other embodiments, powder bed 134 may include any suitable build material that enables DMLM system 100 to function as described, including, for example and without limitation, ceramic powders, metal-coated ceramic powders, and thermoset or thermoplastic resins.

Laser devices 116a and 116b are configured to generate a laser beam of sufficient energy to at least partially melt the build material of powder bed 134. In one embodiment, laser devices 116a and 116b are yttrium-based solid state lasers configured to emit a laser beam having a wavelength of about 1070 nanometers (nm). In other embodiments, laser devices 116a and 116b may include any suitable type of laser that enables DMLM system 100 to function as described herein, such as a CO₂ laser. Further, although DMLM system 100 is shown and described as including two laser devices 116a and 116b, DMI,M system 100 may in the alternative include less than (e.g., 1) or more than (e.g., 3 or more) the two laser devices depicted. In one embodiment, for example, DMLM system 100 may include a first laser device having a first power and a second laser device having a second power different from the first laser power, or at least two laser devices having substantially the same power output. In yet other embodiments, DMLM system 100 may include any combination of laser devices that enable DMLM system 100 to function as described herein. As shown in FIG. 1, the DMLM machine 114 can direct laser beams from laser devices 116a and 116b across selective portions of powder bed 134 to create a solid component.

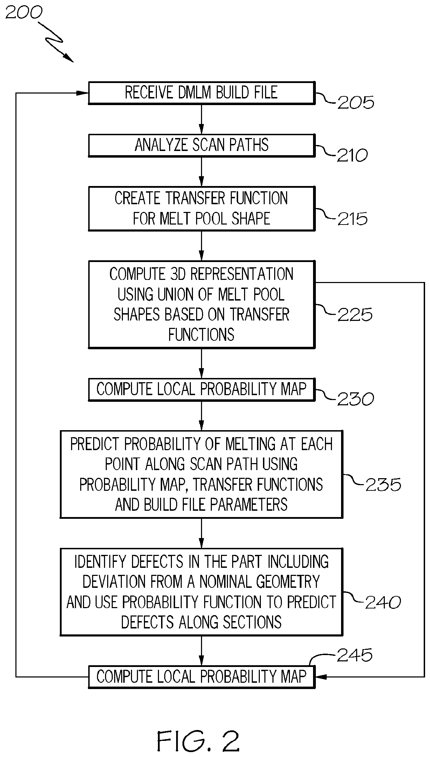

Further, a user can input various parameters through the user input device 110 in order to modify the build file 104, upload the build file 104 and/or other files in the computer system 106. This build file 104 is then transmitted via a network 112 to the DMLM Machine 114 where a component is made. The build file 104 can be modified by the user and/or using the various processes described herein (e.g., according to the processes disclosed with respect to FIG. 2).

In one embodiment, when analyzing the build file 104, after the build file 104 is read in with the scan paths, the computer system 106 can predict defects in the additive part. The computer system 106 can calculate a transfer function based off the parameters in the build file 104 in order to predict a local melt pool shape at each point along a scan path. Further, the computer system 106 can compute a 3D representation of at least a portion of the scan path based off the transfer function by adding a third axis indicating if the value has changed. The representation can also be computed by performing iso-surface extraction of a 3D signed distance function where the 3D signed distance function represents an isosurface for regions melted 2+,3+,4+, ... n+ exactly 2x, exactly 3x, ... (n-1)x, etc by storing the n smallest melts.

The computation of the 2D and 3D functions can be computed either all at once or one small region at a time and the local shape of the function is interpolated between one or more locally defined shapes on the scan path. In addition the 3D signed distance function can be created using a locally defined 2-dimensional signed distance function where the 2-dimensional signed distance functions are pre-computed in a look up table. In addition the 2D distance function can be computed as the part is formed and the build file is analyzed.

Further the transfer function can be established using parameters to indicate that the part or section is tilted at an angle that is a function of the incidence angle of the laser. Any of these functions and calculations can be computed using machine learning (e.g. autoregressive-moving-average (ARMA), augmented recurrent neural networks (ARNN), and the like) trained with experimental data and/or high-fidelity simulation using the computer system 106 and processor 108 and can be a function of the substrate temperature as determined by experiment and a part-level thermal model.

The transfer function can potentially be adjusted at various positions to account for non-steady state behavior in the melt pool and can be adjusted based on the local geometry. Further the transfer function can be adjusted based on the process parameters (e.g. power, speed, focus, spot-size of the system) where the nominal scan paths are misaligned based on a misalignment between the optical system or systems.

The defect analysis can include an estimate of closed porosity, where the porosity in the results are identified by extracting connected components and flagging those with negative signed volume as "pores". The defect analysis can also include an estimate of surface connected porosity where the surface connected porosity is computed using morphological dilation and erosion operations or where the surface connected porosity is computed on overlapping subsets (e.g., chunk-by-chunk). The defect analysis can include a check for excessive melting where the part becomes too weak to perform its intended function, evaluating the surface finish (e.g. curvature) and geometric conformance, and comparing the result to the nominal geometry. The excessive melting can be tied to a threshold, which is largely dependent upon the material. For instance, some materials excessive melting over five times the original amount would be a concern, and for some materials excessive melting would not be a concern. When displaying to a user, the data in the analysis can be presented using a point cloud, voxels, a faceted isosurface, and/or a higher resolution simulation in the regions of interest flagged from the initial (coarser) analysis.

In one embodiment, computer system 106 is also configured to operate at least partially as a data acquisition device and to monitor the operation of DMLM system 100 during fabrication of a component. In one embodiment, for example, computer system 106 receives and processes electrical signals from the DMI,M machine 114. Computer system 106 may store information associated with melt pool size based on electrical signals, which may be used to facilitate controlling and refining a build process for DMLM system 100 or for a specific component built by DMLM system 100.

In one embodiment of the present disclosure, settings such as a laser power, speed and movement of the laser beam or beams and spot size of the laser, among other variables are set to a particular amount in the build file 104. During a beam on powder trial, where the laser beams are in producing a beam on the powder material, the laser devices 116a and 116b are run with such settings so the laser devices 116a and 116b perform a single strike so that a melt pool is created. The computer system 106 then analyzes the melt pool to obtain a cross sectional 2D melt pool shape. This analysis can be used as a transfer function relating a given set of process parameters, such as laser power, and those mentioned above, into melt pool shape. For instance, the system computes a 2D function shape of the particular slice of the part and then adds a third axis indicating whether the data is changing at a particular point to create a 3D function. The 2D transfer function can also be transformed to include stop and end effects on a third axis to create a 3D function.

Further, computer system 106 may be configured to adjust one or more build parameters in real-time based on signals received from sensors 132, such as a camera. For example, as DMLM system 100 builds a component, computer system 106 processes signals from sensors 132 using data processing algorithms to determine the size and temperature of melt pools and other information. Computer system 106 may compare the size and temperature of melt pool to an expected or desired melt pool size and temperature based on a calibration model, which can include, as noted above, a number of parameters including beam spot size and the like. Computing device 106 may generate control signals that are fed back to the DMLM machine 114 and used to adjust one or more build parameters to correct discrepancies in a melt pool. For example, where computer system 106 detects discrepancies in a melt pool, computer system 106 may adjust the power of laser devices 116a and 116b during the build process to correct such discrepancies.

It should be noted that any of the methods described herein can include an additional step of providing a system comprising distinct software modules embodied on a computer readable storage medium; the modules can include, for example, any or all of the elements depicted in the block diagrams and/or described herein; by way of example and not limitation, a geometrical compensation module. The method steps can then be carried out using the distinct software modules and/or sub-modules of the system, as described above, executing on one or more hardware processors. Further, a computer program product can include a computer-readable storage medium with code adapted to be implemented to carry out one or more method steps described herein, including the provision of the system with the distinct software modules.

FIG. 2 is a DMLM additive manufacturing method 200 to operate the DMLM system 100 as shown in FIG. 1. In general, computer-aided design (CAD) software may be used to design a 3D part. An output file generated by the CAD software may be analyzed to predict where defects will occur in order to account for these defects by the computer system 106.

In one method 200 encompassing an embodiment of the present disclosure as shown in FIG. 2, at step 205, the computer system 106 in FIG. 1 reads a DMLM build file containing scan path data, along with a number of parameters associated with building a 3D part. This file can also include other data, such as laser speed, scan path coordinates, and the like. The computer system 106 can control the power output of laser devices 116a and 116b and the speed of the laser movement based on build parameters associated with a build file 104. Further, the 3D part build file 104 can be in an .stl format or any other suitable file format for printing. Further, the build file 104 can be turned into different slices that derive scan paths that include a set of commands for the lasers 116a and 116b.

Next, the computer system 106, at step 210, using the processor 108, analyzes the scan paths contained in the build file 104 by taking into account various parameters in the build file including, but not limited to, laser speed, power, spot size, and potentially sensor data, with a photo diode response. More specifically, relevant inputs to the melt pool transfer function are parsed and computed to analyze the scan paths according to step 210. For example, the tool may read the power, speed, and focus information. The tool might also look at the local geometry to see if a particular scan path is printing on top of unexposed powder. Additionally, the tool may be using a simple plume model to determine if the laser is scanning through plume and/or soot created by previous scans. In some embodiments, the tool may also be obtaining sensor data as well.

In step 215, each potential melt pool has its shape determined using 2D transfer functions by calculating a melt pool shape using scan path data, and other variables such as the power of the laser, speed of the laser and focus and other information such as sensor data from a camera, incidence angle, substrate temperature and plume interaction, among others. Using the different parameters, a melt pool shape can be determined. One embodiment includes creating the transfer function through a look-up table that has corresponding parameters, including power of the laser, among others, that correspond to various melt pool shapes including an ellipse, half of an ellipse and a parabola, among other shapes. One illustrative method of calculating the melt pool shape includes performing "bead on plate experiments" and observing the cut ups at a variety of different process conditions and build plate locations. Now the transfer function is a simple look up based on processing parameters found in the build file, as mentioned in the embodiment above. Importantly several repeats can be completed to determine mean dimensions and a distribution (e.g., compute standard deviation to get a normal distribution), which may be written as:
IF power=123, speed=4567, and focus = 0 THEN average_meltpool_width = 345, standard_deviation_meltpool_width = 35, ...
IF power=123, speed=4544, and focus = 0 THEN average_meltpool_width = 322, standard_deviation_meltpool_width = 35, ...

Another illustrative method of calculating the melt pool shape includes performing the same "bead on plate experiments" noted above but also collecting sensor data at the same time. In such a method, curve fitting and/or interpolation may be completed to establish a more complex function that tells us how the sensor data gives us a more accurate estimation of the local melt pool shape. An illustrative hypothetical example provides the following:
IF power=123, speed=4567, and focus = 0 THEN meltpool_width = 5.1 * photodiode_response + 3, ...
IF power=123, speed=4567, and focus = 0 THEN meltpool_width = 5.4 * photodiode_response + 1, ...

Yet another illustrative method of calculating the melt pool shape includes interpolating between pre-computed high fidelity simulations and incorporating local geometry. For example, if historical data indicates melt pool shapes for a wide range of conditions (e.g., power, speed, focus, incidence angle, bulk vs upward facing vs downward facing surface), an interpolation (such as bi-linear, n-linear, multi-level b-spline interpolation, etc.) can be performed to obtain the melt pool dimensions even though they are not present in the original dataset.

After the melt pool shapes are determined along the scan path in step 215, at step 225 the computer system computes a union of melt pool shapes for multiple points along a scan path based off the transfer functions computed at step 215, which can be used to further predict the outcome of the melt pool shapes in a 3D space and to identify defects in the part. In one embodiment, where the transfer function gives the explicit shape of the melt pool then a union of multiple segments can be achieved by using the minimum signed distance between the two distances of the melt pools to create a 3D function representing the melt pools in multiple dimensions and this can further be identified as a potentially defective portion of the part. The user can see this information in real-time as it occurs and finally at step 245, this information can be displayed to a user via the user input device 110 and display 126. The user can see the potential defects in the part displayed, and can choose to opt out of proceeding to step 230 as shown in FIG. 2.

In one embodiment at step 230, the computer system takes into account a previously generated "heat" map that indicates a probability of melting along a scan path to predict melt pool shape along a scan path (e.g., blue color indicates a 100% chance, red indicates a 0% chance). A fast acting simulation or sensor that can give substrate temperature is one illustrative example of an input to the previously discussed melt pool transfer function (e.g., a series of precomputed high fidelity melt pool simulations can tell us how the local melt pool shape changes as a function of substrate temperature). In step 230, the computer system 106 predicts all the places where there might be a pore on the object to be printed, or where the point within the material may be melted more than expected to influence the micro-structure of the part. The prediction occurs where laser power, speed, and focus can be used to calculate a mean and standard deviation for each point along the scan path during a test run of the laser, or other distribution such as a non-gaussian distribution including log-normal, chi-squared, and gamma, among others, and then those numbers are used to create a "heat" map so that each point has a certain percentage probability of being melted based off a previous experimentally derived probability. The heat map can also be generated using a high fidelity simulation with some constant variables, and include other variables in the simulation, such as distribution of powder sizes, and various power, speed and focus based on the 3D printing machine's ability to hold certain parameters constant.

Using this information then the method proceeds to step 235 of computing a surface connected porosity, a surface finish and a deviation from a nominal geometry of the part for the build file 104 and identifying portions of the part that will develop defects by taking the heat map and the known information in the build file 104 in order to predict the melt pool variability for the build file 104 and the full 3D shape of the object. During this process, instead of using a union of melt pool shapes, the system 106 can use basic laws of probability, p(A or B) = p(A) + p(B) - p(A and B), where p is the probability of something happening, to predict the various predicted melt pool shapes along the 3D object and how the shapes interact. At step 240, this calculation is used to determine if the part will develop defects. For example, a low probability that the part will develop defects may be for regions melted at least one time are of concern since they indicate regions that may not be melted and could result in pores. The lower the chance of melting and larger the region at this low probability, the greater the concern. Additionally, a high probability that a part will develop defects may be for regions melted an excessive number of times (e.g., >10), which would be of concern due to overprocessing, potentially leading to undesirable changes in microstructure or other manufacturing anomalies. The user can see this information in real-time as it occurs and finally at step 245, this information can be displayed to a user via the user input device 110 and display 126.

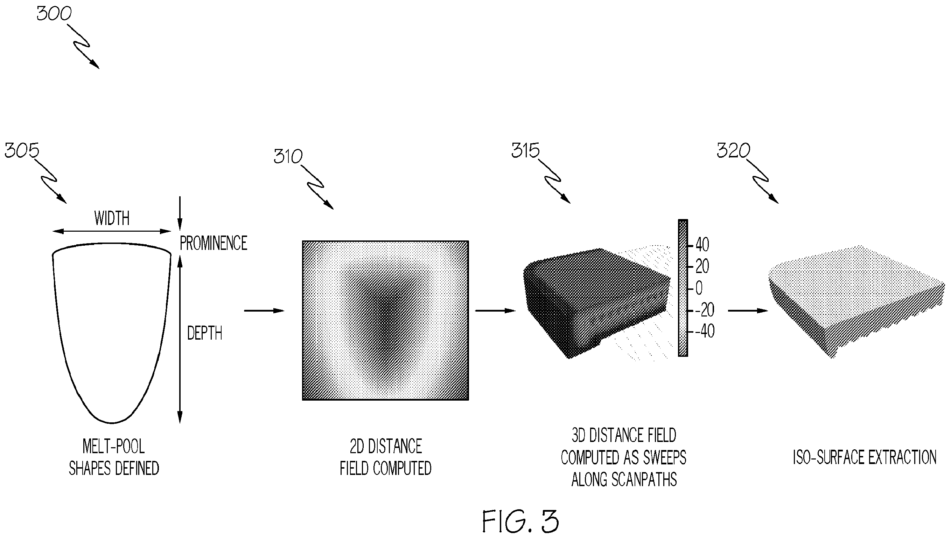

FIG. 3 is a flow chart of one method 300 for defining melt pool shapes and altering a build file 104 based off predicting the amount of melting that will take place in the DMLM build process. First, in one embodiment, the melt pool shape can be defined at step 305 by the user using the user input device 110 in FIG. 1. Based on sensor data, power of the laser, speed of the laser and focus and other information, the system can also determine melt pool shapes. One embodiment includes a look-up table that has corresponding parameters, including power of the laser, among others, that correspond to various melt pool shapes including an ellipse, half of an ellipse and a parabola, among other shapes.

Melt pool shapes can include, among other parameters, a width, depth, and prominence for the melt pool shape and can be entered by the user using the input device 110 from FIG. 1. The shapes can include a contour shape or a hatch shape, among others, depending on the users preference. After the melt pool shape is defined and the scan path data is analyzed, there is a 2D distance function created from the scan path data in the build file. This also includes information based off the shape of the melt pool defined by the user at step 310.

Next a 3D distance function is computed by taking each point along the scan path, which has a 2D function associated with the point at step 315 using the 2D distance function created at step 310. During this step where the 3D distance function is created, start and end effects of the melt pools are considered, along with the tilts of melt pools based off incidence angle, in order to create a more accurate model of the melt pool at the particular point. In addition algorithms can be used in this step to detect porosity, whether it is open or closed, or other artifacts of the point. Machine learning (ML) can also be used to determine the variability of the melt pool along the part as it is formed. This 3D signed distance function approach and automated defect detection algorithms enable the process to scale up to larger simulations or evaluation of large and complex parts. The 3D distance function can efficiently handle Boolean and morphology operations required for part visualization, porosity detection, and quantification of number of melts.

At step 320, after the 3D function is created, there is an iso-surface extraction performed to create the part so that the data is transformed from a voxel with a known signed distance to a boundary representation of the component from the layered build file 104. This extraction allows for smoothing and a probability of melting at each segment to be calculated so that when the part is built the part will be less likely to have distortions along the problematic areas of the part. An iso-surface algorithm can be used to create a boundary representation which can then be used for partition, visualization, surface roughness computation, porosity prediction, and percent amount of over-melt, which all can be displayed to a user. Further, this allows the method to automatically identify non-surface connected lack of fusion porosity by analyzing the resulting iso-surface.

Further, the 2D distance function enables prediction of an arbitrary melt pool cross section, which can potentially lead to a defect. In one embodiment, instead of simulating the entire part at once, the distance function is broken up into manageable chunks that fit into RAM. A single cross section can be used throughout the build or the cross section can be varied by power, speed, spot size, material, layer thickness, local geometry, or laser incidence among other variations.

In addition, the cross section can vary by region type, such as a hatch or contour and bulk or upskin (a region on the part near the surface that is facing upwards) and downskin (a region on the part near the surface that is facing downwards) parameters that change as the shape of the part changes. The computer system 106 can also analyze a melt pool cross section that changes along the strike of the laser as it moves along the material. In a particular embodiment, this involves capturing inherent variation in the melt pool, accounting for changes in the local thermal characteristics, such as a melt pool located by an overhang, and melt pool start and end effects. This is achieved by having the computer system 106 precomputing a more extended library of melt pool shapes and then interpolating between those shapes along the scan path.

In one embodiment, when modeling subsections of a full part, those regions touching the boundary of the region to be rendered can optionally be "capped" to ensure a watertight volume. In addition, the method can identify and compute lack of fusion defects as a result of closed porosity. This is achieved by separating the iso-surface result into connected components and then computing the signed volume of each of those components. Iso-surface extraction algorithms such as marching cubes will return facets oriented in a way that will allow the sign of the volume to quickly and easily distinguish between those surfaces that are pores and those that are not. The surface area of the positive volumes can be used to compute a tortuosity of the part while the volume of the negative volumes gives porosity of the part.

In another embodiment, instead of using a distance function for a hatch segment, a probability that a particle will be melted at each location is used. A union of multiple segments can be achieved by using basic laws of probability, p(A or B) = p(A) + p(B) - p(A and B), where p is the probability of a result. The assumption here is that each hatch is treated as an independent event. With this rule in place, a very similar infrastructure can be used to efficiently compute the probability map as was used to compute the distance function in another embodiment. One embodiment computes a 2D probability map by taking several registered images of a melt pool cross section and then for each pixel, determining the number of images that pixel is melted in (e.g., if a certain pixel is melted in half of the images, then the probability of melting at that location is 50%). To achieve more accurate melt pool cross sections, additional criteria can be considered: laser incidence angle, substrate temperature, distance from start or end of the melt pool, strike length. These effects can be calibrated through simulation, experiment, or measurement data from a build (e.g., infrared camera that measures substrate temperature).

In another embodiment, gas flow and scatter are also considered in correcting the shape of the part. In this case, the full time-history of the scan path is computed and a 3D plume can be constructed to check for interference with either the laser building the part or other lasers (in case of a multi-laser system). Plume interference can be interpreted as either a binary result or as a probability of interference.

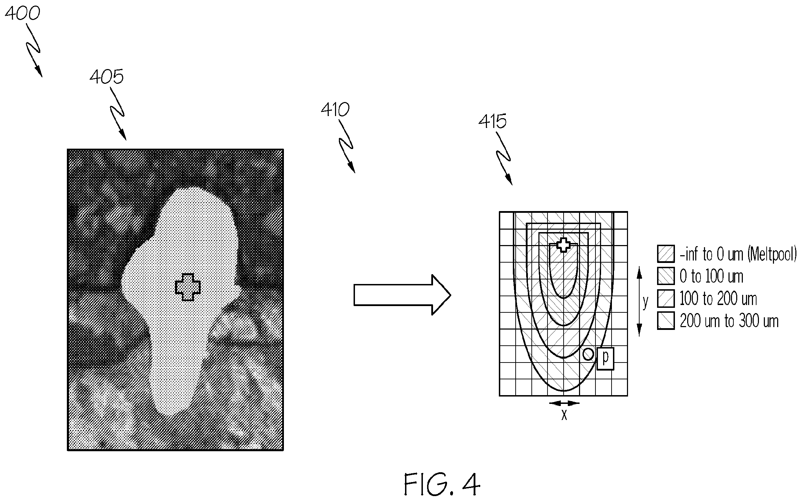

FIG. 4 is a flow chart of one method 400 of mapping a size and a shape of a melt pool. First, at step 405, a melt pool is analyzed and a cross section of the beginning of the part is imaged. In the figure, the scan path is the cross in the middle of the large melt pool at step 405. The area at step 405 is the melt pool shape surrounded by other melt pools. For each point in the 2D shape, there is a signed distance computed to the boundary and that distance can be used to reconstruct the outline of the melt pool. The computer system 106 can extract an iso-surface representation of the melt pool and reconstruct a boundary representation of the melt pool. In addition, the 2D signed distance functions can be swept into a 3D function by adding another axis corresponding to a change in value. In one embodiment, two or more melt pools can be created and the signed distance between the points can be compared in order to get a closer sub-voxel level accuracy. For this application voxel size is 10 to 30 microns, but could be different for different modalities. Next, at step 410, after the melt pool shape is determined based off sensor data or simulations or experiments, a signed distance function, which can include a probability heat map is computed.

Finally image processing techniques can be used to compute the signed distance transform at step 415. Each point on the heat map shown indicates a potential shape of the melt pool at a particular point along a scan path. In this particular case, the point p is 250 microns from the center, and from this information a distance transform can be computed efficiently for an arbitrary melt pool shape. The function of the melt pool shape is then analyzed to determine if there are potential defects in the part that will be formed by the DMLM process. The transform function determines melt pool shape by using various parameters in the build file including power, speed, spot size, material, layer thickness, local geometry, laser incidence angle, or other factors.

In another embodiment, a probability based determination of a melt pool shape can be used. In this embodiment a single melt pool shape can be determined using a heat map and a point p on the heat map. If there are multiple melt pools next to each other, a simple probability function can be used to determine the likelihood of melting at a particular point. Finally, a visualization can be displayed to the user showing where there is a probability greater than a set amount of melting or other problematic formation issues on the whole part, and this can be computed using morphological dilation and erosion operations.

An exemplary technical effect of the methods and systems described herein includes a ability to automatically determine potential defective portions of an additive part using machine vision, which can be used to correct defects as early as possible, thereby avoiding further subsequent issues during an additive manufacturing process.

Exemplary embodiments of the programs, devices, systems, and methods of detecting defects in additively manufactured parts are described above in detail. The programs, devices, systems, and methods are not limited to the specific embodiments described herein, but rather, operations of the methods and components of the systems may be utilized independently and separately from other operations or components described herein. For example, the programs, devices, systems, and methods described herein may have other industrial or consumer applications and are not limited to practice with aircraft components as described herein. Rather, one or more embodiments may be implemented and utilized in connection with other industries.

Although specific features of various embodiments of the disclosure may be shown in some drawings and not in others, this is for convenience. In accordance with the principles of the disclosure, any feature of a drawing may be referenced and/or claimed in combination with any feature of any other drawing.

This written description uses examples to disclose the embodiments, including the best mode, and also to enable any person skilled in the art to practice the embodiments, including making and using any devices or systems and performing any incorporated methods. The patentable scope of the disclosure is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims. The flowchart and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements.

Embodiments described herein are solely for the purpose of illustration. Those in the art will recognize other embodiments may be practiced with modifications and alterations to that described above.

This written description uses examples to explain the disclosure, including the best mode, and also to enable any person skilled in the art to practice the disclosure, including making and using any devices or systems and performing any incorporated methods. The patentable scope of the disclosure is defined by the claims appended hereto, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

Further aspects of the present disclosure are provided by the subject matter of the following clauses:

An additive manufacturing defect prediction method with at least one laser for predicting defects in an additive part, comprising the steps of: reading an additive build file containing a set of scan paths of a three-dimensional (3D) object for a build, the set of scan paths comprising a plurality of points; creating a transfer function from parameters in the build file that corresponds to a local melt pool shape at each point of the plurality of points along the scan paths; and identifying potential defective portions of the additive part including at least one of pores, excessive melting, or surface finish based on the transfer function.

The additive manufacturing defect prediction method as described in any of the preceding clauses, further comprising computing a probability of melting for at least one of the plurality of points based off an experiment and/or a simulation, and a run of the at least one laser; and generating a probability map for melt pool shapes, wherein the probability of melting is combined with the transfer function for each point to predict melt pool shape and further detect defects in the part.

The additive manufacturing defect prediction method as described in any of the preceding clauses, further comprising adjusting the transfer function by automatically accounting for at least one of melt pool variability, incidence angle, plume interaction, start effects, or end effects.

The additive manufacturing defect prediction method as described in any of the preceding clauses, wherein identifying potential defects further includes computing at least one of a surface connected porosity, a surface finish, or a deviation from a nominal geometry.

The additive manufacturing defect prediction method as described in any of the preceding clauses, further comprising capturing a plurality of melt pool shapes; and computing a local probability map analytically or using a Monte Carlo simulation, based on a distribution of melt pool shapes.

The additive manufacturing defect prediction method as described in any of the preceding clauses, further including establishing a transfer function for local melt pool shapes at each point along the scan path, applying the transfer function to obtain a local melt pool shape at each point along the scan path, and computing a union of a local set of 3D melt pool shapes.

The additive manufacturing defect prediction method as described in any of the preceding clauses, further comprising displaying the defects in the part to a user using at least one of a point cloud, voxels, a faceted single surface, or a higher resolution simulation in a region of interest flagged from an initial analysis, and further calculating the transfer functions using at least one of sensor data, measurement data, machine learning, or a high-fidelity simulation.

A computer-program containing programming instructions for an additive manufacturing defect prediction method with at least one laser for predicting defects in an additive part that, when executed, cause a processor to: read an additive build file containing a set of scan paths of a 3D object for a build, the set of scan paths comprising a plurality of points; create a transfer function that corresponds to a local melt pool shape at each point of the plurality of points along the scan paths; and identify defective portions of the additive part including at least one of pores, excessive melting, or surface finish based on the transfer function.

The computer-program as described in any of the preceding clauses, wherein the computer-program further causes the processor to compute a probability of melting for at least one of the plurality of points based off an experiment and/or a simulation, and a run of the at least one laser; and generate a probability map for melt pool shapes, wherein the probability of melting is combined with the transfer function for each point to predict melt pool shape and further detect defects in the part.

The computer-program as described in any of the preceding clauses, wherein the computer-program further causes the processor to automatically adjust the transfer function by automatically accounting for at least one of melt pool variability, incidence angle, plume interaction, start effects, or end effects.

The computer-program as described in any of the preceding clauses, wherein the identification of potential defects further includes computing at least one of a surface connected porosity, a surface finish, or a deviation from a nominal geometry.

The computer-program as described in any of the preceding clauses, wherein the computer-program includes capturing a plurality of melt pool shapes and wherein a local probability map is computed based on a Monte Carlo simulation based on a distribution of melt pool shapes.

The computer-program as described in any of the preceding clauses, wherein the computer program further includes establishing a transfer function for local melt pool shapes at each point along the scan path, applying the transfer function to obtain a local melt pool shape at each point along the scan path, and computing a union of a local set of 3D melt pool shapes.

An additive manufacturing defect prediction system comprising: a processor; at least one laser; and a non-transitory memory communicatively coupled to the processor, the non-transitory memory storing instructions that, when executed, cause the processor to: read an additive build file containing a set of scan paths of a 3D object for a build, the set of scan paths comprising a plurality of points; create a transfer function from parameters in the build file that corresponds to a local melt pool shape at each point of the plurality of points along the scan paths; and identify potential defective portions of an additive part including at least one of pores, excessive melting, or surface finish based on the transfer function.

The system as described in any of the preceding clauses, wherein the system further includes a user input device that includes a memory, a processor, a display and an input.

The system as described in any of the preceding clauses, wherein the system includes a computer system having has a memory and a processor.

The system as described in any of the preceding clauses, wherein the system includes a 3D printing device having a processor, a position assembly, a power system, a heat source, a set of sensors, and memory.

The system as described in any of the preceding clauses, wherein the system includes a network connection to disperse the processing to different processors located on a network.

The system as described in any of the preceding clauses, wherein the instructions further cause the processor to establish a transfer function for local melt pool shapes at least one of the plurality of points along the scan paths, applying the transfer function to obtain a local melt pool shape at each point along the scan path, and compute a union of a set of local 3D melt pool shapes.

The system as described in any of the preceding clauses, wherein the identification is displayed on a user input device to a user using at least one of a point cloud, voxels, a faceted single surface, or a higher resolution simulation in a region of interest flagged from an initial analysis, and where the transfer function is established using at least one of sensor data, measurement data, machine learning, or a high-fidelity simulation.

## Claims

1. An additive manufacturing defect prediction method, with at least one laser, in a system (100) for predicting defects in an additive part, comprising the steps of:
reading an additive build file (104) containing a set of scan paths of a three dimensional object for a build;
creating a transfer function from parameters in the build file (104) that corresponds to local melt pool shape at each point along the scan paths; and
identifying defective portions of the additive part including pores, excessive melting, and surface finish based on the transfer function.

2. The additive manufacturing defect prediction method as described in claim 1, where a probability of melting is computed by the system (100) for each point based off an experimental or simulation, or some combination of the two, run of the at least one laser that generates a probability map for melt pool shapes, and wherein the probability of melting is combined with the transfer function for each point to predict melt pool shape and further detect defects in the part.

3. The additive manufacturing defect prediction method as described in any of claims 1-2, wherein there is an adjustment by the system (100) of the transfer function that includes automatically accounting for melt pool variability, incidence angle, plume interaction, start effects, and end effects.

4. The additive manufacturing defect prediction method as described in any of claims 1-3, wherein the analysis by the system (100) of potential defects further includes computing a surface connected porosity, a surface finish, and a deviation from a nominal geometry.

5. The additive manufacturing defect prediction method as described in any of claims 1-4, wherein the process further comprises capturing by the system (100) a plurality of melt pools and wherein a local probability map is computed analytically or by using a Monte Carlo simulation, based on a distribution of melt pool shapes.

6. A computer-program containing programming instructions for an additive manufacturing defect prediction method used in a system (100) with at least one laser (116a) for predicting defects in an additive part that, when executed, cause a processor to:
read an additive build file (104) containing a set of scan paths of a three dimensional object for a build;
create a transfer function that corresponds to local melt pool shape at each point along the scan paths; and
identifying defective portions of the additive part including pores, excessive melting, and surface finish based on the transfer function.

7. The computer-program as described in claim 6, wherein the computer-program computes a probability of melting for each point based off an experimental or simulation, or some combination of the two, run of the at least one laser that generates a probability map for melt pool shapes, and wherein the probability of melting is combined with the transfer function for each point to predict melt pool shape and further detect defects in the part.

8. The computer-program as described in any of claims 6-7, wherein the computer-program automatically adjusts the transfer function including automatically accounting for melt pool variability, incidence angle, start effects, and end effects.

9. An additive manufacturing defect prediction system (100) comprising:
a processor (108);
at least one laser (116a); and
a non-transitory memory (102) communicatively coupled to the processor (108), the non-transitory memory (102) storing instructions that, when executed, cause the processor (108) to:
read an additive build file (104) containing a set of scan paths of a three dimensional object for a build;
create a transfer function that corresponds to local melt pool shape at each point along the scan paths; and
identify defective portions of the additive part including pores, excessive melting, and surface finish based on the transfer function.

10. The system (100) as described in claim 9, wherein the system (100) further includes a user input device (110) that includes a memory (130), a processor (124), a display (126) and an input (128).

11. The system (100) as described in any of claims 9-10, wherein the system includes a computer system (106) that has a memory (102) and a processor (108).

12. The system (100) as described in any of claims 9-11, wherein the system includes a 3D printing device (114) with a position assembly (118), a power system (120), a heat source (122), a set of sensors (132), a powder bed (134), and at least one laser (116a).

13. The system (100) as described in any of claims 9-12, wherein the system (100) includes a network connection to disperse the processing to different processors located on a network (112).

14. The system (100) as described in any of claims 9-13, further including causing the processor (108) in the computer system (106) to establish a transfer function for local melt pool shapes at each point along the scan paths, applying the transfer function to obtain a local melt pool shape at each point along the scan path, and computing a union of the local 3-dimensional melt pool shapes.

15. The system (100) as described in any of claims 9-14, wherein the analysis is displayed on the user input device (110) to a user using a point cloud, voxels, a faceted single surface, and a higher resolution simulation in the regions of interest flagged from an initial analysis, and where the transfer function is established using sensor data, measurement data, machine learning, or a high-fidelity simulation.
